# EUROPEAN PATENT SPECIFICATION

(11) **EP 4 444 786 B1**
(45) Date of publication and mention of the grant of the patent: **04.02.2026**
(21) Application number: 22836328.9
(22) Date of filing: 09.12.2022
(51) Int. Cl.: C08G 73/10

(54) **POLYETHERIMIDE HAVING REACTIVE BRANCHING**
POLYETHERIMID MIT REAKTIVER VERZWEIGUNG
POLYÉTHERIMIDE À RAMIFICATION RÉACTIVE

(30) Priority: 09.12.2021 EP 21213483
(43) Date of publication of application: 16.10.2024
(73) Proprietor: SHPP Global Technologies B.V., 4612 PX Bergen op Zoom (NL)
(72) Inventor: ODLE, Roy Ray, Mt Vernon, Indiana 47620-9367 (US); MONDSCHEIN, Ryan J., Cumming, Georgia 30041 (US); DENNIS, Joseph Michael, Chicago, Illinois 60605 (US); ARRINGTON, Clay Bradley, Gilbert, Arizona 85297 (US); LONG, Timothy Edward, Blacksburg, Virginia 24060 (US)
(74) Representative: Balder IP Law, S.L.
(86) International application number: PCT/IB2022/061992
(87) International publication number: WO 2023/105480

(56) References cited:
- WO-A1-2018/126146
- JP-A- 2007 217 476
- JP-A- 2019 172 989
- KR-B1- 102 090 193
- US-A1- 2017 306 094
- US-A1- 2020 115 501
- CHUCHALOV A V ET AL: "Synthesis, Properties, and Application of Homopolyimides Based on 3,5-Diaminobenzoic Acid", DOKLADY. CHEMISTRY, MAIK NAUKA/INTERNPERIODICA PUBLISHING, MOSCOW, RU, vol. 501, no. 1, 1 November 2021 (2021-11-01), pages 233 - 238, XP037731094, ISSN: 0012-5008, [retrieved on 20220320], DOI: 10.1134/S0012500821110021
- EASTMOND G C ET AL: "Grafted and segmented hydrophilic polyimides for microfiltration membranes - Part I. Synthesis and characterisation", JOURNAL OF MEMBRANE SCIENCE, ELSEVIER BV, NL, vol. 207, no. 1, 1 September 2002 (2002-09-01), pages 29 - 41, XP004369848, ISSN: 0376-7388, DOI: 10.1016/S0376-7388(01)00750-5

## Description

### BACKGROUND

Polyimides (PIs), typically classified as high-performance polymers, possess high thermal stability (>450°C), thermomechanical properties, mechanical performance, and highly aromatic composition. Although PIs possess numerous properties required for applications in automotive, aerospace, electronics, and consumer applications, the rigid and aromatic backbone presents processing challenges such as insolubility or limited melt flow at common processing temperatures and shear rates. Thus, these polymers require manufacturing using high energy consumption or alterations to the backbone composition to improve processability. Recently, advances in additive manufacturing (also known as 3-dimensional (3-D) printing) developments offer new avenues to manufacture previously difficult to process PIs.

The processability of PIs can be improved by incorporation of flexible linkages into the backbone such as an ether and/or an isopropylidene/hexafluoro-isopropylidene. Commonly known as polyetherimides (PEIs), these high-performance thermoplastics offer easier injection molding and other processing, while maintaining desirable thermal and mechanical properties. Other methods can be utilized to improve processability of PEIs. Incorporation of thioether linkages increases backbone flexibility, but often can lessen thermal stability. Long-chain branching (LCB) can improve shear thinning behavior at processing shear rates, though careful consideration is required to avoid crosslinking during synthesis of the PEIs. Decreasing chain packing and alignment through alterations in backbone regiochemistry, pendant groups, or bulky halogenated monomers can sometimes improve processability but is also likely to increase cost and reduce mechanical properties.

Accordingly, there remains a continuing need for polyetherimides having improved processability, high thermal stability, and superior mechanical properties.

### SUMMARY

Provided is a self-branching polyetherimide, wherein the self-branching polyetherimide includes a first repeating unit derived from polymerization of the aromatic dianhydride and a first diamine, wherein the first diamine comprises a carboxyl-substituted C₆₋₂₄ aromatic hydrocarbon group; and optionally, a second repeating unit derived from polymerization of an aromatic dianhydride and a second diamine, wherein the second diamine comprises a C₁₋₃₀ divalent hydrocarbon group, optionally comprising 1 to 4 heteroatoms, wherein the self-branching polyetherimide is end-capped with phthalic anhydride.

Also provided is a branched polyetherimide, derived from thermal decarboxylation and crosslinking of the self-branching polyetherimide. The branched polyetherimide may also be referred to herein as a self-branched polyetherimide.

Another aspect provides a self-branching polyamic acid, including a condensation reaction product of a dianhydride of formula (5): 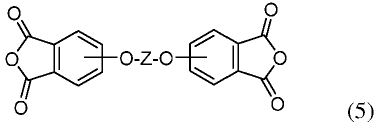 or a chemical equivalent thereof with a first diamine; optionally a second diamine; and phthalic anhydride, wherein the first diamine is represented by formula (6): 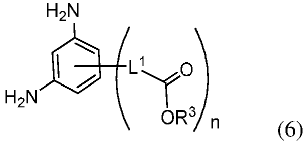 wherein, each L¹ is independently a single bond or a divalent linking group, each R³ is independently hydrogen, substituted or unsubstituted C₁₋₃₀ alkyl, substituted or unsubstituted C₃₋₃₀ cycloalkyl, substituted or unsubstituted C₁₋₃₀ heterocycloalkyl, substituted or unsubstituted C₆₋₃₀ aryl, or substituted or unsubstituted C₁₋₃₀ heteroaryl, preferably hydrogen, and n is an integer of 1 to 3, or 1 to 2, preferably wherein the divalent linking group is one or more of substituted or unsubstituted C₁₋₃₀ alkylene, substituted or unsubstituted C₃₋₃₀ cycloalkylene, substituted or unsubstituted C₁₋₃₀ heterocycloalkylene, substituted or unsubstituted C₆₋₃₀ arylene, substituted or unsubstituted C₁₋₃₀ heteroarylene, -O-, -C(O)-, -C(O)-O-, -N(R^{2b})-, -S-, or -S(O)₂-, wherein R^{2b} is hydrogen, straight chain or branched C₁₋₂₀ alkyl, monocyclic or polycyclic C₃₋₂₀ cycloalkyl, or monocyclic or polycyclic C₁₋₂₀ heterocycloalkyl.

Still another aspect provides a method for the manufacture of a self-branching polyetherimide including heating the self-branching polyamic acid to form the self-branching polyetherimide.

Yet another aspect provides an article including a branched polyetherimide obtained from the self-branching polyetherimide, the branched polyetherimide, or a branched polyetherimide obtained from the self-branching polyamic acid.

### DETAILED DESCRIPTION

Polymers having latent reactive pendant groups or reactive end-cappers (endgroups) can react during or after processing to form products with the desired properties of compositions that are more difficult to process. Reactive extrusion and post-processing treatment utilize reactive functionality, typically activated at high temperatures, to increase molecular weight or promote crosslinking during or after processing. This can help to facilitate processing while maintaining final desired properties once finished. Common functionalities include various phenylethynyl structures as chain end-cappers due to their high thermal stability and tunability.

Long-chain branching (LCB) influences polymer melt strength and shear thinning behavior, both contributing to the polymer's processability. Low branching density reduces coil size promoting lower viscosity and more rapid shear thinning at similar molecular weights and processing temperatures. Thus, PEIs incorporating LCB offer an avenue to tune rheological performance while increasing melt flow properties. The present inventors have discovered that melt processing-induced branching using lower molecular weight functionalized PEIs can provide higher molecular weight branched PEIs with zero-shear viscosity during or after processing. PEIs typically possess desirable flame retardance due to their highly aromatic composition, and this flame retardancy rating increases based on higher molecular weight; hence the present inventors have discovered a way of improving both flame retardance and processability.

An aspect provides a self-branching polyetherimide. The self-branching polyetherimide is a melt-processable polymer incorporating reactive pendant carboxylic acid functionality. The reactive pendant carboxylic acid group(s) afford a branching point for branching the self-branching polyetherimide in the melt. The resulting melt-processed product of the self-branching polyetherimide is a branched polyetherimide (or a self-branched polyetherimide). In other words, the self-branching polyetherimide is a linear polymer until the melt processing step, when thermal decarboxylation and crosslinking provide the resulting self-branched polyetherimide. Without wishing to be bound to theory, the pendant carboxylic acid group(s) may undergo decarboxylation to induce crosslinking of the self-branching polyetherimide to form the branched polyetherimide. Hence, the self-branching polyetherimide provides a reactive pathway to produce branched polyetherimide having long chain branching. The resulting branched polyetherimide provides films that achieve, for example, improved flame resistance with no dripping and short after-flame times.

As used herein, the term "self-branching polyetherimide" refers to the polyetherimide including reactive carboxylic acid functionalities or derivatives thereof, which are capable of self-branching. At high temperatures, these functionalities decarboxylate to form biphenyl units or other crosslinks through radical coupling. As used herein, the term "crosslinking" refers to thermal reaction of the self-branching moiety (i.e., the carboxylic group or derivative thereof). The self-branching polyetherimide, which as noted above is linear when produced, undergoes crosslinking at the reactive carboxylic sites to form the branched polyetherimide products. Unlike other long-chain branched polyimides and polyetherimides that may be synthesized directly using a trivalent or higher valency polyamine branching group, the self-branching polyetherimides of the present disclosure do not use a polyamine as a point of long chain branching.

The self-branching polyetherimide that includes a first repeating unit derived from polymerization of an aromatic dianhydride and a first diamine, where the first diamine includes a carboxyl-substituted C₆₋₂₄ aromatic hydrocarbon group. The self-branching polyetherimide is end-capped with phthalic anhydride.

The first repeating unit of the self-branching polyetherimide, which for the sake of convenience is referred to as the polyetherimide unless clearly indicated otherwise by the context of later usage, can be represented by formula (1) 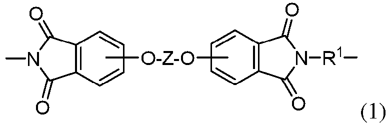 wherein the group Z in -O-Z-O- is a divalent organic group, and can be an aromatic C₆₋₂₄ monocyclic or polycyclic moiety optionally substituted with 1 to 6 heteroatoms, 1 to 8 halogen atoms, or a combination thereof, provided that the valence of Z is not exceeded. The divalent bonds of the -O-Z-O- group are in the 3,3', 3,4', 4,3', or the 4,4' positions. Exemplary groups Z include groups derived from a dihydroxy compound of formula (4): 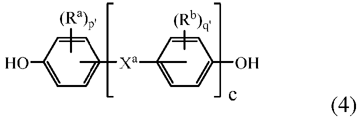 wherein R^{a} and R^{b} can be the same or different and are a halogen atom or a monovalent C₁₋₆ alkyl group, for example, p' and q' are each independently integers of 0 to 4; c is 0 to 4; and X^{a} may be a bridging group connecting the hydroxy-substituted aromatic groups, where the bridging group and the hydroxy substituent of each C₆ arylene group may be disposed ortho, meta, or para (preferably para) to each other on the C₆ arylene group. The bridging group X^{a} may be a single bond, -O-, -S-, -S(O)-, -S(O)₂-. -C(O)-, or a C₁₋₁₈ organic bridging group. The C₁₋₁₈ organic bridging group may be cyclic or acyclic, aromatic or non-aromatic, and may further include halogens and/or heteroatoms such as oxygen, nitrogen, sulfur, silicon, or phosphorous. The C₁₋₁₈ organic group can be disposed such that the C₆ arylene groups connected thereto are each connected to a common alkylidene carbon or to different carbons of the C₁₋₁₈ organic bridging group. A specific example of a group Z is a divalent group of formula (4a) 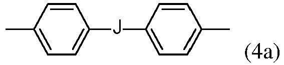 wherein J is -O-, -S-, -C(O)-, -SO₂-, -SO-, or -C_{y}H_{2y}- wherein y is an integer from 1 to 5 or a halogenated derivative thereof (including a perfluoroalkylene group). In a specific aspect, Z is a derived from bisphenol A, such that J in formula (3a) is 2,2-isopropylidene.

In formula (1), each R¹ is independently a group of formula (3) 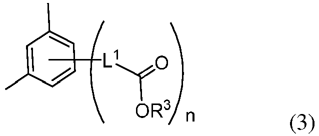 wherein each L¹ is independently a single bond or a divalent linking group, and n is an integer of 1 to 3, or 1 to 2. Preferably, L¹ is a single bond or a divalent linking group that is one or more of substituted or unsubstituted C₁₋₃₀ alkylene, substituted or unsubstituted C₃₋₃₀ cycloalkylene, substituted or unsubstituted C₁₋₃₀ heterocycloalkylene, substituted or unsubstituted C₆₋₃₀ arylene, substituted or unsubstituted C₁₋₃₀ heteroarylene, -O-, -C(O)-, -C(O)-O-, -N(R^{2b})-, -S-, or -S(O)₂-, wherein R^{2b} is hydrogen, straight chain or branched C₁₋₂₀ alkyl, monocyclic or polycyclic C₃₋₂₀ cycloalkyl, or monocyclic or polycyclic C₁₋₂₀ heterocycloalkyl. Each R³ is independently hydrogen, substituted or unsubstituted C₁₋₃₀ alkyl, substituted or unsubstituted C₃₋₃₀ cycloalkyl, substituted or unsubstituted C₁₋₃₀ heterocycloalkyl, substituted or unsubstituted C₆₋₃₀ aryl, or substituted or unsubstituted C₁₋₃₀ heteroaryl, preferably hydrogen. For example, each R¹ can be independently a group of formula (3a): 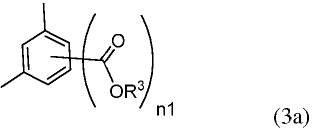 wherein each R³ is as defined for formula (3), and n1 is an integer of 1 to 3, or 1 to 2. In some aspects, each R¹ can be independently a group of formula (3b): 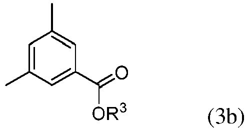 wherein R³ is as defined for formula (3). Even more preferably, each R¹ is independently a group of formula (3c)

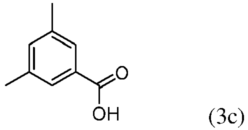

The self-branching polyetherimide optionally further includes a second repeating unit derived from the polymerization of an aromatic dianhydride and a second diamine, wherein the second diamine includes a C₁₋₃₀ divalent hydrocarbon group, optionally comprising 1 to 4 heteroatoms. For example, the second repeating unit can be represented by formula (2): 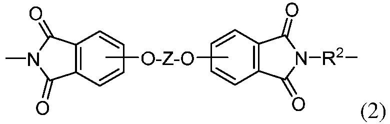 wherein each Z can be a group as described above for formula (1). In some aspects, group Z is the same in both the first repeating unit and the second repeating unit.

In formula (2), each R² is independently a C₁₋₃₀ divalent hydrocarbon group, optionally comprising 1 to 4 heteroatoms. For example, each R² is the same or different C₆₋₂₄ aromatic hydrocarbon group or a halogenated derivative thereof, a straight or branched chain C₂₋₂₀ alkylene group or a halogenated derivative thereof, a C₃₋₈ cycloalkylene group or halogenated derivative thereof, in particular a divalent group of any one of the following formulae: 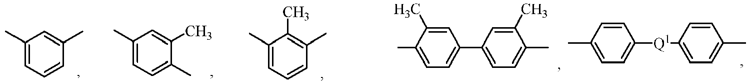 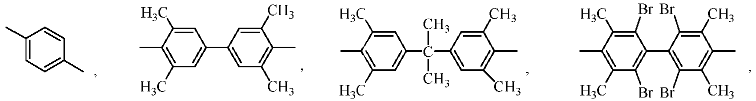 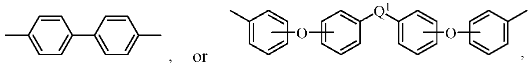 wherein Q¹ is -O-, -S-, -C(O)-, -SO₂-, -SO-, -P(R^{k})(=O)- wherein R^{k} is a C₁₋₈ alkyl or C₆₋₁₂ aryl, - C_{y}H_{2y}- wherein y is an integer from 1 to 5 or a halogenated derivative thereof (which includes perfluoroalkylene groups), or -(C₆H₁₀)_{z}- wherein z is an integer from 1 to 4. In a particular aspect, each R² is independently meta-phenylene, para-phenylene, bis(4,4'-phenylene)sulfone, bis(3,4'-phenylene)sulfone, or bis(3,3'-phenylene)sulfone.

When the self-branching PEI is a copolymer including first repeating units of formula (1) and second repeating units of formula (2), the first repeating units can be present in an amount of 0.01 to 100 mole percent (mol%), or 1 mol% to 75 mol%, or 10 mol% to 50 mol%, based on 100 mol% total repeating units in the PEI. For example, the self-branching PEI can include 0.01 mol% to 100 mol%, or 1 mol% to 75 mol%, or 10 mol% to 50 mol% of the first repeating unit; and 0 mol% to 99.99 mol%, or 25 mol% to 99 mol%, or 50 mol% to 90 mol% of the second repeating unit.

The self-branching PEI can be a copolymer, for example a polyetherimide sulfone copolymer comprising structural units wherein at least 50 mol% of the repeating units in the PEI are of formula (1), and the remaining 50 mol% of repeating units in the PEI are of formula (2) wherein Q¹ is -SO₂- . Alternatively, the self-branching polyetherimide can be a copolymer that optionally comprises additional structural imide units, for example imide units wherein V is of the formulae 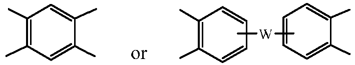 wherein W is a single bond, -O-, -S-, -C(O)-, -SO₂-, -SO-, -P(R^{j})(=O)- wherein R^{j} is a C₁₋₈ alkyl or C₆₋₁₂ aryl, or -C_{y}H_{2y}- wherein y is an integer from 1 to 5 or a halogenated derivative thereof (which includes perfluoroalkylene groups). These additional structural imide units can comprise less than 20 mol%, or 0 mol% to 10 mol%, or 0 mol% to 5 mol%, or 0 mol% to 2 mol% of the total number of repeating units in the polyimide, based on a total of 100 mol%. In some aspects, no additional imide units are present other than polyetherimide units.

The polyetherimides can be prepared by methods known in the art, including a polycondensation or ether-forming polymerization.

In one or more aspects, the polyimide can be prepared by polycondensation, which includes an imidization of a dianhydride of formula (5) 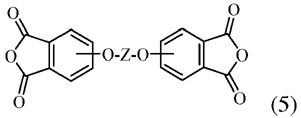 or a chemical equivalent thereof, with a first diamine of formula (6) 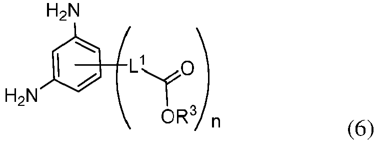 and, optionally, a diamine of formula (7)

H₂N-R²-NH₂ (7)

in a solvent and under conditions effective to provide the self-branching polyetherimide, wherein n is an integer of 1 to 3, or 1 to 2, or 1, and Z, L¹, R², and R³ are as described herein.

For example, the first diamine can be represented by formula (6a) 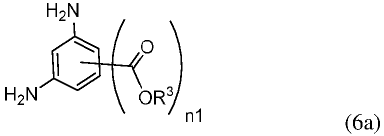 wherein n1 is an integer of 1 to 3, or 1 to 2, or 1, and R³ is as defined herein. In some aspects, the first diamine is represented by formula (6b) 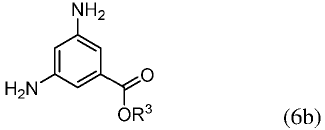 wherein R³ is as defined herein, and is preferably hydrogen.

Exemplary dianhydrides of formula (5) include 3,3-bis[4-(3,4-dicarboxyphenoxy)phenyl]propane dianhydride; 4,4'-bis(3,4-dicarboxyphenoxy)diphenyl ether dianhydride; 4,4'-bis(3,4-dicarboxyphenoxy)diphenyl sulfide dianhydride; 4,4'-bis(3,4-dicarboxyphenoxy)benzophenone dianhydride; 4,4'-bis(3,4-dicarboxyphenoxy)diphenyl sulfone dianhydride; 2,2-bis[4-(2,3-dicarboxyphenoxy)phenyl]propane dianhydride; 4,4'-bis(2,3-dicarboxyphenoxy)diphenyl ether dianhydride; 4,4'-bis(2,3-dicarboxyphenoxy)diphenyl sulfide dianhydride; 4,4'-bis(2,3-dicarboxyphenoxy)benzophenone dianhydride; 4,4'-bis(2,3-dicarboxyphenoxy)diphenyl sulfone dianhydride; 4-(2,3-dicarboxyphenoxy)-4'-(3,4-dicarboxyphenoxy)diphenyl-2,2-propane dianhydride; 4-(2,3-dicarboxyphenoxy)-4'-(3,4-dicarboxyphenoxy)diphenyl ether dianhydride; 4-(2,3-dicarboxyphenoxy)-4'-(3,4-dicarboxyphenoxy)diphenyl sulfide dianhydride; 4-(2,3-dicarboxyphenoxy)-4'-(3,4-dicarboxyphenoxy)benzophenone dianhydride; and, 4-(2,3-dicarboxyphenoxy)-4'-(3,4-dicarboxyphenoxy)diphenyl sulfone dianhydride, or a combination thereof.

Specific examples of diamines of formula (7) include hexamethylenediamine, polymethylated 1,6-n-hexanediamine, heptamethylenediamine, octamethylenediamine, nonamethylenediamine, decamethylenediamine, 1,12-dodecanediamine, 1,18-octadecanediamine, 3-methylheptamethylenediamine, 4,4-dimethylheptamethylenediamine, 4-methylnonamethylenediamine, 5-methylnonamethylenediamine, 2,5-dimethylhexamethylenediamine, 2,5-dimethylheptamethylenediamine, 2, 2-dimethylpropylenediamine, N-methyl-bis (3-aminopropyl) amine, 3-methoxyhexamethylenediamine, 1,2-bis(3-aminopropoxy) ethane, bis(3-aminopropyl) sulfide, 1,4-cyclohexanediamine, bis-(4-aminocyclohexyl) methane, m-phenylenediamine, p-phenylenediamine, 2,4-diaminotoluene, 2,6-diaminotoluene, m-xylylenediamine, p-xylylenediamine, 2-methyl-4,6-diethyl-1,3-phenylene-diamine, 5-methyl-4,6-diethyl-1,3-phenylene-diamine, benzidine, 3,3'-dimethylbenzidine, 3,3'-dimethoxybenzidine, 1,5-diaminonaphthalene, bis(4-aminophenyl) methane, bis(2-chloro-4-amino-3,5-diethylphenyl) methane, bis(4-aminophenyl) propane, 2,4-bis(p-amino-t-butyl) toluene, bis(p-amino-t-butylphenyl) ether, bis(p-methyl-o-aminophenyl) benzene, bis(p-methyl-o-aminopentyl) benzene, 1, 3-diamino-4-isopropylbenzene, bis(4-aminophenyl) sulfide, bis-(4-aminophenyl) sulfone (also known as 4,4'-diaminodiphenyl sulfone (DDS)), bis(4-aminophenyl) ether, or a combination thereof. Any regioisomer of the foregoing compounds can be used. For example, the diamine of formula (7) can be m-phenylenediamine, p-phenylenediamine, 4,4'-diaminodiphenyl sulfone, or a combination thereof.

A catalyst can be present during imidization. Exemplary catalysts include sodium aryl phosphinates, guanidinium salts, pyridinium salts, imidazolium salts, tetra(C₇₋₂₄ arylalkylene) ammonium salts, dialkyl heterocycloaliphatic ammonium salts, bis-alkyl quaternary ammonium salts, (C₇₋₂₄ arylalkylene)(C₁₋₁₆ alkyl) phosphonium salts, (C₆₋₂₄ aryl)(C₁₋₁₆ alkyl) phosphonium salts, phosphazenium salts, and combinations thereof. The anion can be, for example, chloride, bromide, iodide, sulfate, phosphate, acetate, maculate, tosylate, or the like, or a combination thereof. The amount of catalyst can be, for example, 0.01 to 5 mol%, or 0.05 to 2 mol%, or 0.2 to 1 mol%, based on the moles of diamine (6) or (7).

The polyetherimides can be prepared by polymerization in a solvent, for example in a relatively non-polar solvent with a boiling point above 100°C, or above 150°C, for example o-dichlorobenzene, dichlorotoluene, 1,2,4-trichlorobenzene, dimethylacetamide, diphenyl sulfone, anisole, veratrole, diphenylether, N-methylpyrrolidone, phenetole, or the like, or a combination thereof. The polymerization can be at a temperature of at least 110°C, or 150 to 275°C, or 175 to 225°C for solution polymerization. Atmospheric or super-atmospheric pressures can be used, for example up to 500 kilopascals (kPa), to minimize solvent loss. Reaction time varies by reactants and conditions, and can be 0.5 hours (h) to 3 days, or 0.5 to 72 h, or 1 to 30 h, or 1 to 20 h; or in 20 h or less, or 10 h or less, or 3 h or less.

The phthalic anhydride (PA) endcapping agent can be added to the polymerization in the range of more than 0 mol% to 20 mol%, or 1 mol% to 10 mol%, based on the amount of the diamine (6) and optional diamine (7). The endcapping agent can be added at any time. For example, the endcapping agent can be mixed with or dissolved into reactants having similar functionality, such as combining an anhydride-containing endcapping agent with dianhydride (5). In order to achieve maximum molecular weight, the quantity of amine functionality [2 x diamine moles] = moles of anhydride functionality ([2 x dianhydride moles + moles of anhydride in the endcapping agent]).

The molar ratio of dianhydride (5) to the combination of diamine (6) and optionally diamine (7) can be 0.9:1 to 1.1:1, or even 1:1.

The polyetherimide can be synthesized by an ether-forming polymerization, which proceeds via an imidization, i.e., reaction of a diamine of formula (6) and optionally (7) with an anhydride of formula (10) 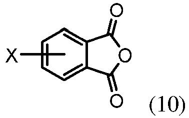 wherein X is a nitro group or halogen, to provide intermediate bis(phthalimide)s of formula (11) 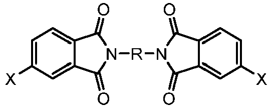 wherein R is as described for R¹ in formula (1) and optionally as R² in formula (2), and X is as described in formula (10). An optional catalyst or optional monofunctional chain terminating agent as described above can be present during imidization.

The bis(phthalimide) (11) is subsequently reacted with an alkali metal salt of a dihydroxy aromatic compound of formula (12)

AMO-Z-OAM (12)

wherein AM is an alkali metal and Z is as defined herein, to provide the anhydride-capped oligomer; and the anhydride-capped oligomer is optionally reacted with the amino compound (8) under conditions effective to provide the polyetherimide. Polymerization conditions effective to provide the polyetherimides are generally known and can be conducted in a solvent as described above. This polymerization can also be conducted in the melt, for example at 250°C to 350°C, where a solvent is generally not present.

Also provided is a polyamic acid solution including 1 to 99 weight percent (wt%), or 10 wt% to 90 wt%, or 0.1 wt% to 20 wt% or 0.5 wt% to 10 wt%, or 1 wt% to 5 wt% of a self-branching polyamic acid derived from a condensation reaction of the dianhydride of formula (5), the diamine of formula (6), optionally the diamine of formula (7), and phthalic anhydride; and a solvent. The polyamic acid solution can be prepared by combining the dianhydride (5), the diamine components of formula (6) and optionally (7), the phthalic anhydride, and the solvent by stirring until a viscous solution is formed. For example, a method of manufacturing the polyamic acid solution can include combining the components and heating with agitation or stirring at a temperature and for a period of time effective to dissolve the components in the solvent, or at a temperature lower than the boiling point of the solvent. The temperature is not particularly limited and can be selected to avoid instability of the polyamic acid. Preferably, the temperature is 50°C or less, or 30°C or less, or 25°C or less.

For example, a self-branching polyamic acid film can be prepared by casting the polyamic acid solution onto a substrate and removing solvent from the cast layer. The solvent can be removed by any number of means, including by heating the cast layer or heating the cast layer under heat and pressure. A self-branching polyamic acid film can subsequently be imidized using thermal treatment to form the self-branching PEI, which can then undergo curing to form the branched PEI as described herein. For example, a solution cast sample of the self-branching polyamic acid can form a self-branching polyetherimide at a temperature of 250°C to 300°C, or 260°C to 300°C, or 265°C to 300°C, as determined by thermogravimetric analysis (TGA).

The self-branching polyetherimide can have one or more of the following properties. The self-branching polyetherimide can have a glass transition temperature (T_{g}) of greater than 200°C, or 200°C to 400°C, or 220°C to 400°C, or 220°C to 360°C, as determined by differential scanning calorimetry (DSC); and a thermal decomposition temperature (T_{d}) of greater than 450°C, or 450°C to 550°C, or 500°C to 550°C, as determined at a 5% weight loss by thermogravimetric analysis (TGA).

The branched polyetherimide can have one or more of the following properties. The branched polyetherimide can have a glass transition temperature of greater than 160°C, or 160°C to 300°C, or 180°C to 250°C, or 200°C to 250°C, as determined by DSC; and a flame retardancy rating of V0 at a thickness of 0.8 mm, or a flame retardancy rating of V0 at a thickness of 0.6 mm, or a flame retardancy rating of V0 at a thickness of 0.4 mm, as measured according to ASTM D3801.

In another aspect, a polymer composition is provided. The composition can include the self-branching or branched polyetherimide and a second polymer. Such polymer compositions can include 1 wt% to 99 wt% of the self-branching or branched polyetherimide and 1 wt% to 99 wt% of the second polymer, or 10 wt% to 90% of the self-branching or branched polyetherimide and 10 wt% to 90 wt% of the second polyimide, based on the total weight of the composition excluding solvents.

Illustrative examples of second polymers include, but are not limited to, a polyacetal, poly(C₁₋₆ alkyl)acrylate, polyacrylamide, polyacrylonitrile, polyamide, polyamideimide, polyanhydride, polyarylene ether, polyarylene ether ketone, polyarylene ketone, polyarylene sulfide, polyarylene sulfone, polybenzothiazole, polybenzoxazole, polybenzimidazole, polycarbonate, polyester, poly(C₁₋₆ alkyl)methacrylate, polymethacrylamide, cyclic olefin polymer, polyolefin, polyoxadiazole, polyoxymethylene, polyphthalide, polyimide, polysilazane, polysiloxane, polystyrene, polysulfide, polysulfonamide, polysulfonate, polythioester, polytriazine, polyurea, polyurethane, vinyl polymer, or the like, or a combination thereof.

The polymer composition can include various additives ordinarily incorporated into compositions of these types, with the proviso that any additive is selected so as to not significantly adversely affect the desired properties of the composition. Exemplary additives include antioxidants, thermal stabilizers, light stabilizers, ultraviolet light (UV) absorbing additives, quenchers, plasticizers, lubricants, mold release agents, antistatic agents, visual effect additives such as dyes, pigments, and light effect additives, flame resistances, anti-drip agents, and radiation stabilizers. Particulate fillers and reinforcing fillers can also be present, and include mineral fillers, flaked fillers, carbon nanotubes, exfoliated nanoclays, carbon nanowires, carbon nanospheres, carbon-metal nanospheres, carbon nanorods, carbon-metal nanorods, nanoparticles, insoluble polymers, glass fibers, carbon fibers, glass-carbon fibers, talc including fibrous, modular, needle shaped, and lamellar talc, graphite, fibrillated fluoropolymers, polymer fibers and filaments, woven fibers, metal particles, inorganic fibers, single crystal fibers or "whiskers", or the like. Combinations of additives can be used. The foregoing additives can be present individually in an amount from 0.005 wt% to 10 wt%, or combined in an amount from 0.005 wt% to 20 wt%, or 0.01 wt% to 10 wt%, based on the total weight of the composition.

Also provided herein is an article that includes the branched polyetherimide obtained from the self-branching polyetherimide, the branched polyetherimide, the branched polyetherimide obtained from the self-branching polyamic acid, the polymer composition described herein, or a combination thereof. A wide variety of articles can be manufactured, for example articles of utility in automotive, telecommunication, aerospace, electrical/electronics, battery manufacturing, wire coatings, transportation, food industry, and healthcare applications. Such articles can include films, membranes, fibers, foams, sheets, conductive parts, coatings, preforms, composites, varnishes, lenses, or the like. For example, the article may be an open or closed cell foam, a nano-foam, a battery separator, an ion exchange membrane, tubing, a capillary, an anti-static coating, a self-cleaning surface, an anti-fouling surface, or a scratch resistant part. Another particular example is a separator for a secondary battery, such as a lithium ion battery. The articles can be extruded or molded, for example injection molding, melt extrusion, thermoforming, or roto-molding. The articles can be made by an additive manufacturing method, for example three-dimensional printing. Components for electronic devices and components for sterilizable medical articles are especially useful. Thin-wall components manufactured by injection molding are useful, such as a wall having a thickness of 0.1 mm to 10 mm, or 0.2 mm to 5 mm, or 0.5 mm to 2 mm.

The self-branching and branched polyetherimides and polyamic acids are further illustrated by the following non-limiting examples.

### EXAMPLES

Table 1 lists the components that were used in the examples.

**Table 1**

| Component | Description |
|---|---|
| DABA | 3,5-Diaminobenzoic acid (Sigma-Aldrich) |
| mPD | meta-Phenylene diamine (Sigma-Aldrich) |
| BPADA | 2,2-Bis[4-(3,4-dicarboxyphenoxy)phenyl]propane dianhydride (4,4'-Bisphenol A dianhydride) (SABIC) |
| PA | Phthalic anhydride (Sigma-Aldrich) |
| *oDCB* | ortho-Dichlorobenzene (Sigma-Aldrich) |
| PEI | Polyetherimide including structural units of bisphenol A dianhydride with meta-phenylene diamine, phthalic anhydride end-capped, with an MFR of about 9 g/10 min at 337°C, obtained as ULTEM 1000 (SABIC) |

Physical testing of the compositions was conducted according to the following test methods and procedures. Unless indicated otherwise, all test standards set forth herein are the test standards in effect as of 2016.

Proton nuclear magnetic resonance (¹H NMR) spectroscopy was performed at 23°C using a Varian Unity 400 at 400 MHz in deuterated chloroform (CDCl₃) or deuterated dimethyl sulfoxide (DMSO-d₆).

Advanced Permeation Chromatograph (APC) was performed using a Waters ACQUITY equipped with 450 Å x 150 mm, 200 Å x 150 mm, and 125 Å x 150 mm XT columns and a Waters ACQUITY RI detector used a 1.0 mL/min flow rate at 40°C in CHCl₃ to afford molecular weights relative to polystyrene standards. Prior to APC analysis, dynamic light scattering (DLS) at 40°C was used for verifying that all polymer solutions in CHCl₃ showed no aggregation.

Glass transition temperature (T_{g}) was determined under nitrogen using Differential Scanning Calorimetry (DSC) according to ASTM D3418. The test was performed using a DSC Q2000 DSC instrument by heating from -10°C to 300°C at a rate of 10°C/min, and T_{g} values were determined from the second heat cycle via inflection point.

Dynamic mechanical analysis (DMA) revealed modulus versus temperature behavior utilizing a TA Instruments Q800 Dynamic Mechanical Analyzer in oscillatory tension mode at a 1 Hz frequency, a 15 µm oscillatory amplitude, and a 0.01 N static force with a 3°C/min heating ramp. Stepwise isothermal analysis probed imidization temperatures (*T*ᵢₘ) by DMA. T_{g} was also determined by DMA where noted.

Thermogravimetric analysis (TGA) was used to determine thermal degradation temperatures with a Discovery TGA Q500. The samples were heated from 25°C to 600°C at a heating rate of 10°C/min in a stream of nitrogen (25 mL/min). Stepwise isothermal analysis employed a heating rate of 10 °C min⁻¹ and an isothermal step when weight % changes were >0.1% min⁻¹ and heating resumed once weight % changes were <0.01% min⁻¹. TGA coupled to a Thermo-Fisher Nicolet iS-10 Fourier transform infrared spectrometer (TGA-FTIR) analyzed evolved gas of 20 mg samples heated at 20°C/min. Isothermal steps were employed for 30 minutes between solvent evaporation/imidization and decarboxylation as well as between decarboxylation and backbone degradation to separate FTIR analysis of the various off-gas components.

FTIR analysis of imidized films was performed on a Varian 670-IR equipped with a Diamond GladiATR attachment. Spectral data was acquired with 32 scans each at a resolution of 4 cm⁻¹.

Compression molding was performed on a Carver Model No. 3856 and utilized two stainless steel plates covered with KAPTON films coated with PARTALL Power Glossy Liquid (Rexco) mold release agent to produce transparent and ductile films. 16 mil thick steel shims were used to control film thickness.

Melt flow rheology was performed under N₂ atmosphere on a TA Instruments Discovery Hybrid Rheometer (DHR)-2 using an 8 mm diameter disposable aluminum parallel-plate geometry. Strain sweep testing from 0.01-10% oscillatory strain at 1 Hz probed the linear viscoelastic region (LVR). Utilizing 1.25% oscillatory strain amplitude and an oscillatory frequency range of 1-100 rad/s, frequency sweeps at 10°C intervals from 340 to 220 °C provided complex viscosity (η*) as well as storage (G') and loss moduli (G"). TA Instruments software (TRIOS) generated master curves by shifting viscosity and moduli. Melt flow property determination involved power law analysis of the shear thinning regime. Time sweeps at 1 Hz and 1.25 % strain amplitude for 3600 seconds monitored viscosity and modulus as a function of time and induced crosslinking in the melt.

Flammability tests were performed following the procedure of Underwriter's Laboratory Bulletin 94 (UL94) entitled "Tests for Flammability of Plastic Materials, UL 94". Several ratings can be applied based on the rate of burning, time to extinguish, ability to resist dripping, and whether or not drips are burning. Bar thicknesses were 0.4 mm. The flame retardancy rating was characterized by the UL-94 vertical burning test following ASTM D3801 standard. In each test, a flame was applied to the sample for 10 seconds (s) and then removed. The self-extinguishing time was recorded as t₁ (s). The flame was then re-applied for another 10 seconds, and the self-extinguishing time was recorded as t₂ (s).

### Example 1: Synthesis of DABA-PAA and DABA-PEI

Diaminobenzoic acid-substituted polyamic acid (DABA-PAA) and diaminobenzoic acid-substituted polyetherimide (DABA-PEI) were prepared as follows.

The synthesis of a DABA-PEI having an Mₙ of 20,000 g/mol follows as an example targeting 50 mol% DABA based on the total moles of diamines used to prepare the polymer. DABA (3.02 g, 19.6 mmol), mPD (2.12 g, 19.6 mmol), BPA-DA (20.00 g, 37.8 mmol), and NMP (92 mL) were charged to a three-necked, 500-mL, round-bottomed flask. The flask was then equipped with a glass stir rod fitted with a stir blade, a rubber septum, and a Dean-Stark trap topped with a condenser. The contents were purged with nitrogen for 20 minutes while slowly stirring. The reaction mixture was stirred at 75-100 rpm for 18 hours at 23°C until the components were dissolved. PA (0.42 g, 2.9 mmol) was then added as an endcapping reagent. The resulting product solutions were then either precipitated into methanol and isolated as DABA-PAA, or solutions were solution cast to produce DABA-PAA films, which were then imidized by heating to form DABA-PEI films.

Alternatively, the reaction mixture including DABA, mPD, BPA-DA, and NMP was heated at 180°C with stirring at 75-100 rpm for 18 hours. PA was then added to the reaction mixture. The product was isolated either by precipitation or solution casting of a film.

A similar procedure was used to prepare DABA-PAA and DABA-PEI that incorporated 10, 25, and 75 mol% of DABA. Additional samples including 100 mol% DABA were also prepared by excluding mPD from the synthetic procedure described above.

¹H NMR spectroscopy was used to determine the incorporation of DABA (mol%) and to determine Mₙ through end-group analysis of the chemical shifts associated with the PA aromatic protons.

As seen in Scheme 1, poly(amic acid)s (PAA)s synthesized at room temperature proceeded through a one-pot, two-step reaction to provide a linear polymer.

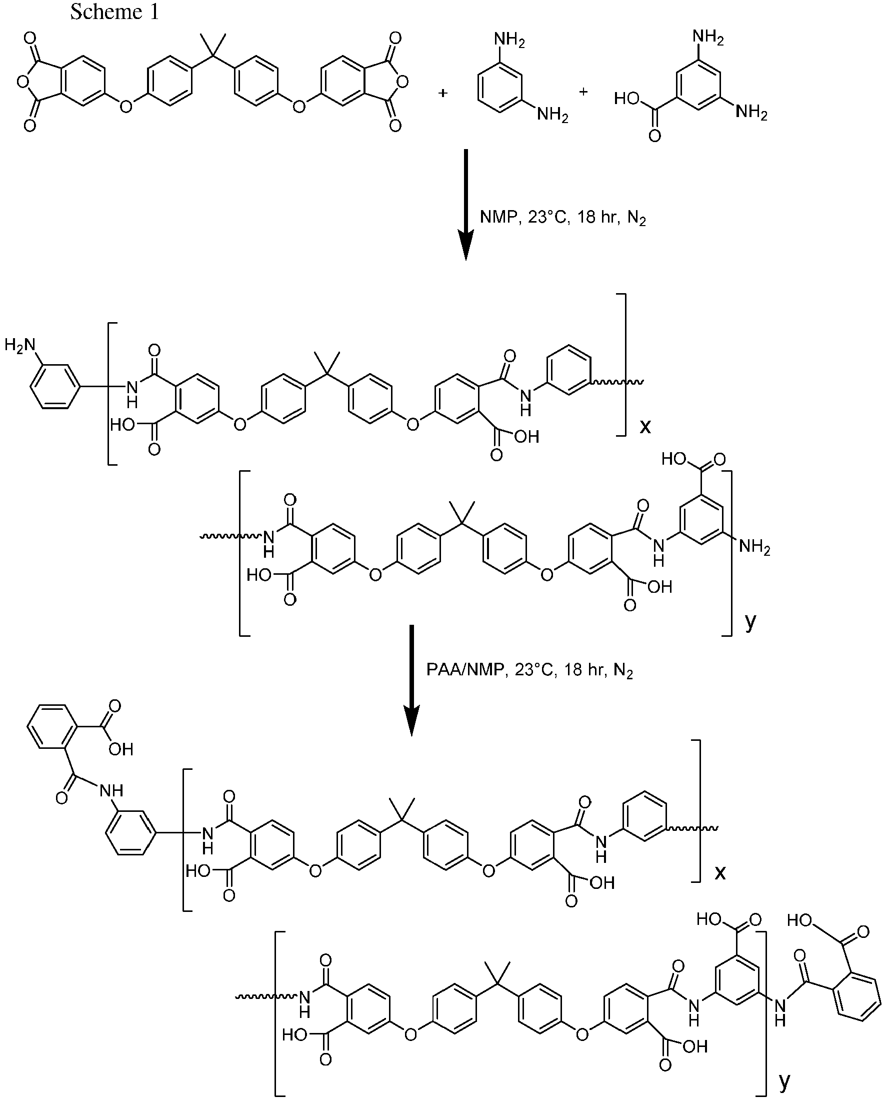

### Example 2: Imidization of DABA-PAA

For the DABA-PAA, solution casting was used to produce films to analyze imidization temperatures. Samples cast onto glass slides/plates were heated at 80°C, 150°C, or 200°C and then subjected to imidization temperature analysis. After isolating the films and drying, FTIR and TGA determined the temperatures required for full imidization (*T*ᵢₘ). TGA was conducted by stepwise analysis to probe the *T*ᵢₘ, where a change of greater than 0.1 wt% per minute prompted an isothermal step lasting until a change of less than 0.01 wt% per minute occurred, with repeating heating and isothermal steps until the sample reached 600°C. Using 50 mol% DABA-PAA as an example, films heated to 80°C and 150°C exhibited an isothermal step around 260°C and a second isothermal step around 480°C to 490°C. The DABA-PAA film heated to 200°C exhibited a slight drop in weight % around 260°C, but no isothermal step, while exhibiting an isothermal step in the 480°C to 490 °C range. Without wishing to be bound to theory, the first isothermal step occurs due to volatilization of the NMP solvent as well as thermal imidization. *T*ᵢₘ was determined as the temperature of the isothermal step plus 10°C. FTIR analysis of films heated to appropriate *T*ᵢₘ confirmed these temperatures.

Further analysis was conducted on the samples heated at 150°C. The compositions displayed two isothermal steps by TGA following heating at 150°C. The first isothermal step occurred between 250°C to 300°C. Higher mol% of DABA incorporation increased the temperature of the first step. The first isothermal step plus 10°C determined the *T*ᵢₘ of each composition. The *T*ᵢₘ increased linearly with increased incorporation of the mol% of DABA comonomer, up to 300°C for the 100 mol% DABA-PEI. The compositions exhibited a steady wt% between *T*ᵢₘ and 450°C, where weight loss began again until the second isothermal step near 520°C. The second isothermal step occurred due to backbone degradation, consistent with other PEIs. Without wishing to be bound to theory, weight loss between 450°C and the second isothermal step became more noticeable for higher mol% incorporation of DABA suggesting thermal instability before backbone degradation imparted by the inclusion of the carboxylic acid pendant group.

### Example 3: Thermal Properties of DABA-PEI

Determining the *T*ᵢₘ corresponding to the mol% DABA incorporation enabled PEI synthesis on a larger industrial scale. Reaction setup remained consistent with DABA-PAA synthesis of Example 1, but the reaction was heated to 180°C to directly obtain the DABA-PEI samples. After completion of the synthesis, heating the reaction flask to the appropriate *T*ᵢₘ removed NMP solvent as well as completed the imidization. Samples were re-dissolved in NMP and solution casted to afford transparent and ductile films. TGA of fully imidized DABA-PEIs revealed no weight loss until around 450°C, with earlier onset of weight loss occurring for PEIs with higher mol% DABA incorporation, consistent with TGA analysis of DABA-PAAs.

Differential scanning calorimetry (DSC) determined *T_{g}* increased with higher mol% DABA incorporation. Normalizing the *T*ᵢₘ with the *T*_{g} revealed all compositions required similar temperatures greater than the *T*_{g} (~45°C) to undergo full imidization. As noted above, the imidization temperature increased linearly with increasing DABA incorporation.

The thermal properties of DABA-PEIs are shown in Table 2.

**Table 2**

| DABA (mol%) | | T_{d, 5%} (°C) | T_{g (}°C) | | Tᵢₘ (°C) | Tᵢₘ-T_{g(}°C) |
|---|---|---|---|---|---|---|
| Sample | ¹H NMR | TGA^{a} | DSC^{b} | DMA^{c} | TGA^{d} | TGA^{d}-DSC^{b} |
| PEI | 0 | 517 | 217 | 228 | 259 | 42 |
| 10 | 10 | 514 | 219 | ND | 260 | 41 |
| 25 | 25 | 505 | 228 | 237 | 275 | 45 |
| 50 | 50 | 501 | 242 | 239 | 280 | 44 |
| 75 | 75 | 482 | 261 | 260 | 287 | 39 |
| 100 | 100 | 451 | 265 | 278 | 300 | 43 |

| | | | | | | |
|---|---|---|---|---|---|---|
| ^{a}TGA: 10 °C min⁻¹ heat, N₂ ^{b}DSC: heat/cool/heat, second heat; N₂, 10°C min⁻¹. *T*_{g} reported as inflection point of step transition. ^{c}DMA: tension mode, 1 Hz, 3 °C/min. *T*_{g} reported as peak maximum in tan delta curve ^{d}TGA: 10 °C min⁻¹ heat, isothermal if change in weight % min⁻¹ >0.1, resume heat if change in weight % min⁻¹ <0.01. *T*ᵢₘ determined as isothermal step between 250 and 300°C, imidization confirmed by FTIR | | | | | | |

### Example 4: DMA Analysis of DABA-PEI

Dynamic mechanical analysis (DMA) was used to probe the thermomechanical performance over a range of temperatures. The DABA-PEIs exhibited flow after *T*_{g} other than at 100 mol% of DABA-PEI, which possessed a plateau after the *T*_{g}. The plateau, extending upwards of 400°C, indicated crosslinking.

### Example 5: FTIR Analysis of DABA-PEI

To further understand the decarboxylation and crosslinking for this system, TGA coupled to FTIR monitored and analyzed the off-gas from the TGA furnace. Heating 20 mg films with equivalent size and shape probed the chemical composition of the off-gas. The first volatilized compound is the NMP solvent, between 10 and 20 minutes. This peak was followed by CO₂/CO for the 100 mol% of DABA-PEI sample, with no CO₂/CO peak for the 0 mol% of DABA-PEI indicating a relationship between the peak and amount of initial DABA monomer incorporated into the sample. After the CO₂/CO peak around 70 minutes, backbone degradation was observed at >80 minutes. Similar peak wavenumbers and intensity were observed between both samples. Further analysis of the intensity of the Gram-Schmidt plot at times corresponding to the maximum removal of CO₂/CO versus mol% of DABA incorporation revealed a linear relationship, allowing for quantification of decarboxylation during different processing procedures.

### Example 6: Branching of DABA-PEI

The reactivity of the pendant carboxylic acid groups at elevated temperatures provided the reactive branching in the melt. Utilizing a rheometer, time sweeps in the melt at 340°C of 0 mol%, 5 mol%, and 10 mol% of DABA-PEIs targeted crosslinking induced in the melt. All samples had a target Mₙ of 20,000 g/mol and heating to 300°C under N₂ atmosphere ensured full imidization before rheological analysis. Thus, some crosslinking may have occurred during the initial imidization. Samples containing DABA possessed a smaller gap between the storage (G') and loss (G") modulus over the entire time sweep compared to the control PEI. The samples maintained a greater G" relative to G' over the entire time, suggesting no crosslinking. DSC confirmed minimal shifts in the *T*_{g} for the samples after the time sweep, although a slight broadening of the transition suggests a minor change in the polymer architecture.

Advanced permeation chromatography (APC) analyzed the relative molecular weights and polydispersity (PDI) of the PEI control and the 5 mol% of DABA-PEI. The 10 mol% of DABA-PEI produced a heterogeneous solution, unsuitable for APC analysis. The control PEI maintained a similar relative M_{w} while the 5 mol% of DABA-PEI sample increased linearly with time. A corresponding increase in PDI to >2.0 along with solubility in CHCl₃ suggests branching for step-growth polymers. Thus, a change in viscoelastic behavior and rheological performance was expected after processing and samples processed for 60 minutes were further analyzed by melt rheology.

Frequency sweeps at 10°C increments between 340°C and 220°C probed viscoelastic responses. Complex viscosity (η*) master curves revealed a Newtonian plateau for the control PEI sample, while no plateau was discernible for both 5 mol % and 10 mol % of DABA-PEIs. The 10 mol% of DABA-PEI sample exhibited the highest η* at the lowest frequencies, suggesting the greatest amount of branching and potential M_{w}. The 5 mol% of DABA-PEI possessed a higher η* at low frequencies even though it had a slightly lower M_{w}. Without wishing to be bound to theory, low branching density results in an increase in entanglements per chain, which dominates flow behavior at low shear rates over the usual reduction in coil size which commonly reduces η*. Upon reaching higher frequencies, noticeable shear thinning begins and proceeds over 2-3 decades of frequencies, most of which are commonly utilized in processing such as injection molding.

### Example 7: Flame Resistance

Table 3 shows the thermal and flame resistance properties of the PEI compounds.

**Table 3**

| DABA (mol%) | T_{g} (°C) | t₁ | t₂ | t₃ | Drip | Ignite Cotton |
|---|---|---|---|---|---|---|
| 0 | 217 | ND | ND | ND | Y (7/7) | Y (6/7) |
| 5 | 217 | 2.7 ± 1.1 | 2.1 ± 0.2 | 0.0 ± 0.0 | N (7/7) | N (7/7) |
| 10 | 220 | 4.6 ± 1.8 | 5.0 ± 2.5 | 0.0 ± 0.0 | N (5/5) | N (5/5) |

As seen in Table 3, the control PEI sample (0.4 mm thickness) exhibited dripping for all samples and ignited the cotton on 6 of 7 tests, consistent with the UL Recognized, 94V-2 Flame Class Rating for commercial PEI samples at 0.4 mm thickness. The samples for 5 mol% and 10 mol% of DABA-PEI possessed lower t₁ and t₂ after-flame times while possessing no afterglow. No samples dripped or ignited the cotton; thus, the samples achieved a UL94 V0 rating. The crosslinking in DABA-PEI improved the flame resistance properties.

The compositions, methods, and articles can alternatively comprise, consist of, or consist essentially of, any appropriate components or steps herein disclosed. The compositions, methods, and articles can additionally, or alternatively, be formulated so as to be devoid, or substantially free, of any steps, components, materials, ingredients, adjuvants, or species that are otherwise not necessary to the achievement of the function or objectives of the compositions, methods, and articles.

The singular forms "a," "an," and "the" include plural referents unless the context clearly dictates otherwise. "Or" means "and/or" unless clearly indicated otherwise by context. The endpoints of all ranges directed to the same component or property are inclusive and independently combinable. Disclosure of a narrower range or more specific group in addition to a broader range is not a disclaimer of the broader range or larger group. "Combination thereof" as used herein is open-ended and means that a combination comprises one or more of the listed items, optionally with one or more like items not listed.

Unless defined otherwise, technical and scientific terms used herein have the same meaning as is commonly understood by one of skill in the art to which this disclosure belongs. A "combination" is inclusive of blends, mixtures, alloys, reaction products, and the like. "Hydrocarbyl" and "hydrocarbon" refer broadly to a group comprising carbon and hydrogen, optionally with 1 to 3 heteroatoms, for example, oxygen, nitrogen, halogen, silicon, sulfur, or a combination thereof; "alkyl" means a straight or branched chain, saturated monovalent hydrocarbon group; "alkylene" means a straight or branched chain, saturated, divalent hydrocarbon group; "alkylidene" means a straight or branched chain, saturated divalent hydrocarbon group, with both valences on a single common carbon atom; "alkenyl" means a straight or branched chain monovalent hydrocarbon group having at least two carbons joined by a carbon-carbon double bond; "cycloalkyl" means a non-aromatic monovalent monocyclic or multicyclic hydrocarbon group having at least three carbon atoms, "cycloalkenyl" means a non-aromatic cyclic divalent hydrocarbon group having at least three carbon atoms, with at least one degree of unsaturation; "aryl" and "arylene" mean a monovalent group and divalent group respectively containing at least one aromatic ring and optionally a nonaromatic ring, and having only carbon in the ring or rings; "alkylaryl" means an aryl group that has been substituted with an alkyl group; "arylalkyl" means an alkyl group that has been substituted with an aryl group; "heteroaryl" and "heteroarylene" mean a monovalent group and divalent aromatic group respectively wherein at least one carbon in a ring is replaced by a heteroatom (S, O, P, or N); "acyl" means an alkyl group attached through a carbonyl carbon bridge (-C(=O)-); "alkoxy" means an alkyl group attached through an oxygen bridge (-O-); and "aryloxy" means an aryl group as defined above with the indicated number of carbon atoms attached through an oxygen bridge (-O-).

Unless otherwise indicated, each of the foregoing groups can be unsubstituted or substituted, provided that the substitution does not significantly adversely affect synthesis, stability, or use of the compound. Combinations of substituents or variables are permissible. "Substituted" as used herein means that at least one hydrogen on the designated atom or group is replaced with another group, provided that the designated atom's normal valence is not exceeded. When the substituent is oxo (=O), then two hydrogens on the atom are replaced. Exemplary groups that can be present on a "substituted" position include, but are not limited to, cyano; hydroxyl; nitro; alkanoyl (e.g., C₂₋₆ alkanoyl group such as acyl); carboxamido; C₁₋₆ or C₁₋₃ alkyl, cycloalkyl, alkenyl, and alkynyl; C₁₋₆ or C₁₋₃ alkoxy; C₆₋₁₀ aryloxy; C₁₋₆ alkylthio; C₁₋₆ or C₁₋₃ alkylsulfinyl; C₁₋₆ or C₁₋₃ alkylsulfonyl; amino di(C₁₋₆ or C₁₋₃)alkyl; C₆₋₁₂ aryl; C₇₋₁₉ arylalkyl; or C₇₋₁₉ arylalkoxy. When a group is substituted, the indicated number of carbon atoms does not include the carbon atoms, if any, of the substituent group(s).

## Claims

1. A self-branching polyetherimide, comprising:
a first repeating unit derived from polymerization of the aromatic dianhydride and a first diamine, wherein the first diamine comprises a carboxyl-substituted C₆₋₂₄ aromatic hydrocarbon group; and
optionally, a second repeating unit derived from polymerization of an aromatic dianhydride and a second diamine, wherein the second diamine comprises a C₁₋₃₀ divalent hydrocarbon group, optionally comprising 1 to 4 heteroatoms,
wherein the self-branching polyetherimide is end-capped with phthalic anhydride.

2. The self-branching polyetherimide of claim 1, wherein the first repeating unit is represented by formula (1) and the second repeating unit is represented by formula (2): 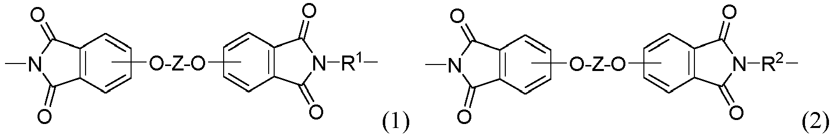 wherein
each Z is independently an aromatic C₆₋₂₄ monocyclic or polycyclic moiety optionally substituted with 1 to 6 heteroatoms, 1 to 8 halogen atoms, or a combination thereof, provided that the valence of Z is not exceeded;
each R¹ is independently a group of formula (3): 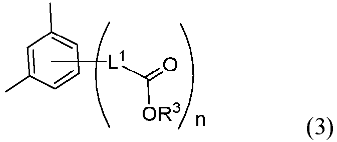 wherein,
each L¹ is independently a single bond or a divalent linking group, preferably wherein the divalent linking group that is one or more of substituted or unsubstituted C₁₋₃₀ alkylene, substituted or unsubstituted C₃₋₃₀ cycloalkylene, substituted or unsubstituted C₁₋₃₀ heterocycloalkylene, substituted or unsubstituted C₆₋₃₀ arylene, substituted or unsubstituted C₁₋₃₀ heteroarylene, -O-, -C(O)-, -C(O)-O-, -N(R^{2b})-, - S-, or -S(O)₂-, wherein R^{2b} is hydrogen, straight chain or branched C₁₋₂₀ alkyl, monocyclic or polycyclic C₃₋₂₀ cycloalkyl, or monocyclic or polycyclic C₁₋₂₀ heterocycloalkyl;
each R³ is independently hydrogen, substituted or unsubstituted C₁₋₃₀ alkyl, substituted or unsubstituted C₃₋₃₀ cycloalkyl, substituted or unsubstituted C₁₋₃₀ heterocycloalkyl, substituted or unsubstituted C₆₋₃₀ aryl, or substituted or unsubstituted C₁₋₃₀ heteroaryl, preferably hydrogen;
n is an integer of 1 to 3, or 1 to 2; and
each R² is independently a C₁₋₃₀ divalent hydrocarbon group, optionally comprising 1 to 4 heteroatoms.

3. The self-branching polyetherimide of claim 2, wherein each R¹ is independently a group of formula (3a): 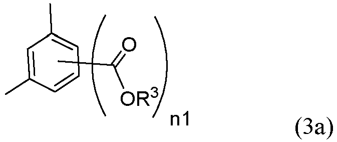
wherein n1 is an integer of 1 to 3, or 1 to 2,
or wherein each R¹ is independently a group of formula (3b):

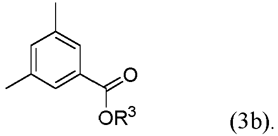

4. The self-branching polyetherimide of any one of the preceding claims, wherein each R² is a C₆₋₂₄ aromatic hydrocarbon group or a halogenated derivative thereof, a straight or branched chain C₂₋₂₀ alkylene group or a halogenated derivative thereof, or a C₃₋₈ cycloalkylene group or halogenated derivative thereof;
or wherein each R² is independently a divalent group of formulae: 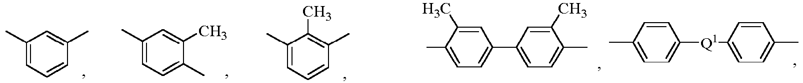 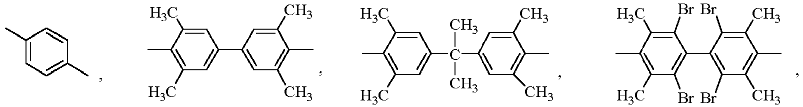 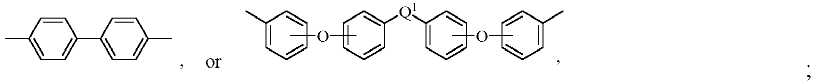 wherein,
Q¹ is -O-, -S-, -C(O)-, -SO₂-, -SO-, -P(R^{k})(O)-, -C_{y}H₂- or a halogenated derivative thereof, or -(C₆H₁₀)_{z}-;
R^{k} is a C₁-8 alkyl or C₆₋₁₂ aryl;
y is an integer from 1 to 5; and
z is an integer from 1 to 4;
or wherein each R² is independently meta-phenylene, para-phenylene, bis(4,4'-phenylene)sulfone, bis(3,4'-phenylene)sulfone, or bis(3,3'-phenylene)sulfone.

5. The self-branching polyetherimide of any one of the preceding claims, wherein each Z is independently derived from a dihydroxy compound of formula (4): 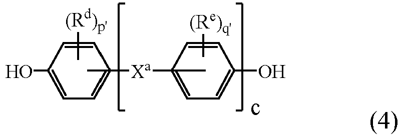 wherein,
each R^{d} and R^{e} is independently a halogen atom or a monovalent C₁₋₆ alkyl group,
p' and q' are each independently integers of 0 to 4,
c is 0 to 4, and
X^{a} is a single bond, -O-, -S-, -S(O)-, -S(O)₂-, -C(O)-, or a C₁₋₁₈ organic bridging group; or wherein each Z is independently a divalent group of formula (4a): 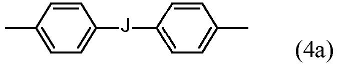 wherein,
J is -O-, -S-, -C(O)-, -SO₂-, -SO-, or -C_{y}H_{2y}- or a halogenated derivative thereof, and
y is an integer from 1 to 5.

6. The self-branching polyetherimide of any one of the preceding claims, comprising:
0.01 to 100 mol%, or 1 to 75 mol%, or 10 to 50 mol% of the first repeating unit; and
0 to 99.99 mol%, or 25 to 99 mol%, or 50 to 90 mol% of the second repeating unit,
each based on 100 mol% total repeating units of the self-crosslinkable polyetherimide.

7. The self-branching polyetherimide of any one of the preceding claims, comprising:
a glass transition temperature of greater than 200°C, or 200 to 400°C, or 220 to 400°C, or 220 to 360°C, as determined by differential scanning calorimetry;
a thermal decomposition temperature of greater than 450°C, or 450 to 550°C, or 500 to 550°C, as determined at a 5% weight loss by thermogravimetric analysis; or
a combination thereof.

8. A branched polyetherimide, derived from thermal decarboxylation and crosslinking of the self-branching polyetherimide of any one of the proceeding claims.

9. The branched polyetherimide of claim 8, which is obtained by melt processing of the self-branching polyetherimide, during which the thermal decarboxylation and the crosslinking provide the branched polyetherimide.

10. The branched polyetherimide of claim 8 or 9, comprising:
a glass transition temperature of greater than 160°C, or 160 to 300°C, or 180 to 250°C, or 200 to 250°C, as determined by differential scanning calorimetry; and
a flame retardancy rating of V0 at a thickness of 0.8 mm, or a flame retardancy of V0 at a thickness of 0.6 mm, or a flame retardancy of V0 at a thickness of 0.4 mm, as measured according to ASTM D3801.

11. A self-branching polyamic acid, comprising a condensation reaction product of:
a dianhydride of formula (5): 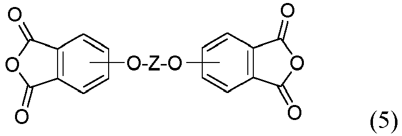 or a chemical equivalent thereof with a first diamine;
optionally a second diamine; and
phthalic anhydride,
wherein the first diamine is represented by formula (6): 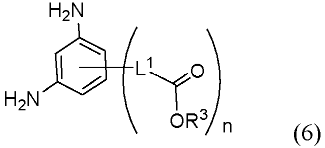 wherein,
each L¹ is independently a single bond or a divalent linking group,
each R³ is independently hydrogen, substituted or unsubstituted C₁₋₃₀ alkyl, substituted or unsubstituted C₃₋₃₀ cycloalkyl, substituted or unsubstituted C₁₋₃₀ heterocycloalkyl, substituted or unsubstituted C₆₋₃₀ aryl, or substituted or unsubstituted C₁₋₃₀ heteroaryl, preferably hydrogen, and
n is an integer of 1 to 3, or 1 to 2,
or wherein the divalent linking group is one or more of substituted or unsubstituted C₁₋₃₀ alkylene, substituted or unsubstituted C₃₋₃₀ cycloalkylene, substituted or unsubstituted C₁₋₃₀ heterocycloalkylene, substituted or unsubstituted C₆₋₃₀ arylene, substituted or unsubstituted C₁₋₃₀ heteroarylene, -O-, -C(O)-, -C(O)-O-, -N(R^{2b})-, -S-, or -S(O)₂-, wherein R^{2b} is hydrogen, straight chain or branched C₁₋₂₀ alkyl, monocyclic or polycyclic C₃₋₂₀ cycloalkyl, or monocyclic or polycyclic C₁₋₂₀ heterocycloalkyl.

12. The self-branching polyamic acid of claim 11, wherein the first diamine is represented by formula (6a): 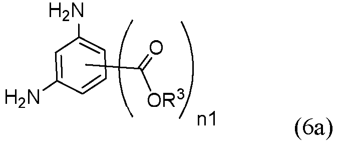 wherein,
n1 is an integer of 1 to 3, preferably 1 or 2, and
each R³ is independently hydrogen, substituted or unsubstituted C₁₋₃₀ alkyl, substituted or unsubstituted C₃₋₃₀ cycloalkyl, substituted or unsubstituted C₁₋₃₀ heterocycloalkyl, substituted or unsubstituted C₆₋₃₀ aryl, or substituted or unsubstituted C₁₋₃₀ heteroaryl, preferably hydrogen,
or wherein the first diamine is represented by formula (6b): 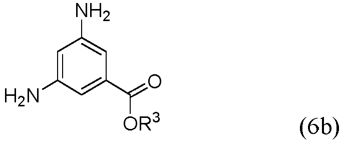 wherein R³ is hydrogen, substituted or unsubstituted C₁₋₃₀ alkyl, substituted or unsubstituted C₃₋₃₀ cycloalkyl, substituted or unsubstituted C₁₋₃₀ heterocycloalkyl, substituted or unsubstituted C₆₋₃₀ aryl, or substituted or unsubstituted C₁₋₃₀ heteroaryl, preferably hydrogen.

13. A method for the manufacture of a self-branching polyetherimide, the method comprising heating the self-branching polyamic acid of claim 11 to form the self-branching polyetherimide.

14. The method of claim 13, wherein a solution cast sample of the self-branching polyamic acid forms the self-branching polyetherimide at a temperature of 250 to 300°C, or 260 to 300°C, or 265 to 300°C, as determined by thermogravimetric analysis.

15. An article comprising a branched polyetherimide obtained from the self-branching polyetherimide of any one of claims 1 to 7, the branched polyetherimide of any one of claims 8 to 10, or a branched polyetherimide obtained from the self-branching polyamic acid of any one of claims 11 or 12, optionally wherein the article is a film, a fiber, a foam, or a molded part.

## Patentansprüche

1. Selbstverzweigendes Polyetherimid, umfassend:
eine erste sich wiederholende Einheit, die aus der Polymerisation des aromatischen Dianhydrids und eines ersten Diamins erhalten wurde, wobei das erste Diamin eine carboxylsubstituierte aromatische C₆₋₂₄-Kohlenwasserstoffgruppe umfasst; und
gegebenenfalls eine zweite sich wiederholende Einheit, die aus der Polymerisation eines aromatischen Dianhydrids und eines zweiten Diamins erhalten wurde, wobei das zweite Diamin eine zweiwertige C₁₋₃₀₋Kohlenwasserstoffgruppe umfasst, die gegebenenfalls 1 bis 4 Heteroatome enthält,
wobei das selbstverzweigende Polyetherimid mit Phthalsäureanhydrid endverkappt ist.

2. Selbstverzweigendes Polyetherimid nach Anspruch 1, wobei die erste sich wiederholende Einheit durch die Formel (1) dargestellt wird und die zweite sich wiederholende Einheit durch die Formel (2) dargestellt wird 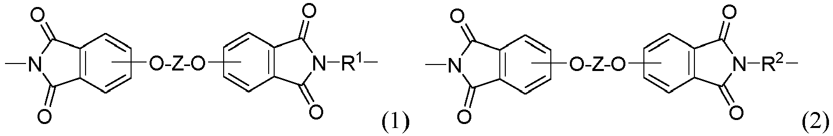 wobei
jedes Z unabhängig eine aromatische monocyclische oder polycyclische C₆₋₂₄-Einheit ist, die optional mit 1 bis 6 Heteroatomen, 1 bis 8 Halogenatomen oder einer Kombination davon substituiert ist, vorausgesetzt, dass die Wertigkeit von Z nicht überschritten wird;
jedes R¹ unabhängig eine Gruppe der Formel (3) ist: 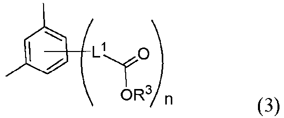 wobei
jedes L¹ unabhängig eine Einfachbindung oder eine zweiwertige Verknüpfungsgruppe ist, wobei die zweiwertige Verknüpfungsgruppe vorzugsweise eine oder mehrere der folgenden Gruppen ist: substituiertes oder unsubstituiertes C₁₋₃₀-Alkylen, substituiertes oder unsubstituiertes C₃₋₃₀-Cycloalkylen, substituiertes oder unsubstituiertes C₁₋₃₀-Heterocycloalkylen, substituiertes oder unsubstituiertes C₆₋₃₀-Arylen, substituiertes oder unsubstituiertes C₁₋₃₀-Heteroarylen, -O-, - C(O)-, -C(O)-O-, -N(R^{2b})-, -S- oder -S(O)₂-, wobei R^{2b} Wasserstoff, geradkettiges oder verzweigtes C₁₋₂₀-Alkyl, monocyclisches oder polycyclisches C₃₋₂₀-Cycloalkyl oder monocyclisches oder polycyclisches C₁₋₂₀-Heterocycloalkyl ist;
jedes R³ unabhängig Wasserstoff, substituiertes oder unsubstituiertes C₁₋₃₀-Alkyl, substituiertes oder unsubstituiertesC₃₋₃₀-Cycloalkyl, substituiertes oder unsubstituiertes C₁₋₃₀-Heterocycloalkyl, substituiertes oder unsubstituiertes C₆₋₃₀-Aryl oder substituiertes oder unsubstituiertes C₁₋₃₀-Heteroaryl, vorzugsweise Wasserstoff, ist;
n ist eine ganze Zahl von 1 bis 3 oder 1 bis 2; und
jedes R² unabhängig eine zweiwertige C₁₋₃₀-Kohlenwasserstoffgruppe ist, die gegebenenfalls 1 bis 4 Heteroatome umfasst.

3. Selbstverzweigendes Polyetherimid nach Anspruch 2, wobei jedes R¹ unabhängig eine Gruppe der Formel (3a) ist: 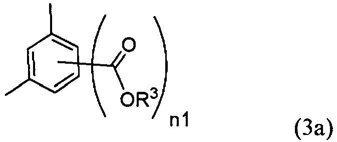
wobei n1 eine ganze Zahl von 1 bis 3 oder 1 bis 2 ist,
oder wobei jedes R¹ unabhängig eine Gruppe der Formel (3b) ist:

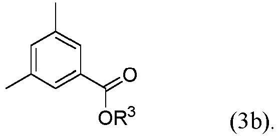

4. Selbstverzweigendes Polyetherimid nach einem der vorhergehenden Ansprüche, wobei jedes R² eine aromatische C₆₋₂₄-Kohlenwasserstoffgruppe oder ein halogeniertes Derivat davon, eine geradkettige oder verzweigte C₂₋₂₀-Alkylengruppe oder ein halogeniertes Derivat davon oder eine C₃₋₈-Cycloalkylengruppe oder ein halogeniertes Derivat davon ist;
oder wobei jedes R² unabhängig eine zweiwertige Gruppe der folgenden Formeln ist: 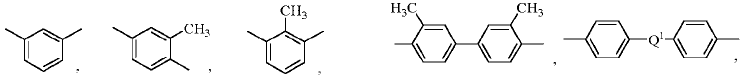 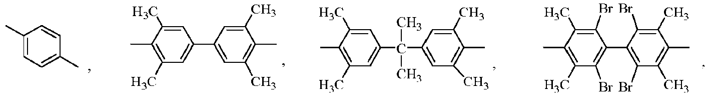 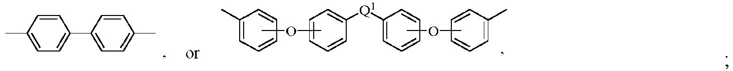 wobei
Q¹ -O-, -S-, -C(O)-, -SO2-, -SO-, -P(R^{k})(O)-, -C_{y}H₂- oder ein halogeniertes Derivat davon, oder -(C₆H₁₀)_{z}- ist;
R^{K} ein C₁₋₈-Alkyl oder C₆₋₁₂-Aryl ist;
y eine ganze Zahl von 1 bis 5 ist; und
z eine ganze Zahl von 1 bis 4 ist;
oder wobei jedes R² unabhängig meta-Phenylen, para-Phenylen, Bis(4,4'-phenylen)sulfon, Bis(3,4'-phenylen)sulfon oder Bis(3,3'-phenylen)sulfon ist.

5. Selbstverzweigendes Polyetherimid nach einem der vorhergehenden Ansprüche, wobei jedes Z unabhängig voneinander von einer Dihydroxyverbindung der Formel (4) erhalten wurde: 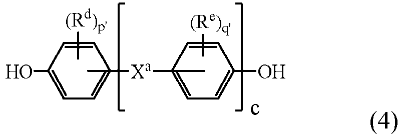 wobei
R^{d} und R^{e} jeweils unabhängig voneinander ein Halogenatom oder eine einwertige C₁₋₆-Alkylgruppe ist,
p' und q' jeweils unabhängig voneinander ganze Zahlen von 0 bis 4 sind,
c 0 bis 4 ist und
X^{a} eine Einfachbindung, -O-, -S-, -S(O)-, -S(O)₂-, -C(O)-, oder eine organische C₁₋₁₈-Brückengruppe ist; oder wobei jedes Z unabhängig eine zweiwertige Gruppe der Formel (4a) ist: 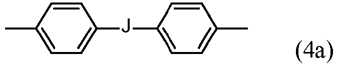 wobei
J -O-, -S-, -C(O)-, -SO₂-, -SO- oder -C_{y}H_{2y}- oder ein halogeniertes Derivat davon ist, und
y eine ganze Zahl von 1 bis 5 ist.

6. Selbstverzweigendes Polyetherimid nach einem der vorhergehenden Ansprüche, umfassend:
0.01 bis 100 Mol-%, oder 1 bis 75 Mol-%, oder 10 bis 50 Mol-% der ersten sich wiederholenden Einheit; und
0 bis 99,99 Mol-%, oder 25 bis 99 Mol-%, oder 50 bis 90 Mol-% der zweiten sich wiederholenden Einheit, jeweils bezogen auf 100 Mol-% der gesamten sich wiederholenden Einheiten des selbstvernetzenden Polyetherimids.

7. Selbstverzweigendes Polyetherimid nach einem der vorhergehenden Ansprüche, umfassend:
eine Glasübergangstemperatur von mehr als 200°C oder 200 bis 400°C oder 220 bis 400°C oder 220 bis 360°C, bestimmt durch dynamische Differenzkalorimetrie;
eine thermische Zersetzungstemperatur von mehr als 450°C oder 450 bis 550°C oder 500 bis 550°C, bestimmt bei einem Gewichtsverlust von 5% durch thermogravimetrische Analyse, oder
eine Kombination davon.

8. Verzweigtes Polyetherimid, das durch thermische Decarboxylierung und Vernetzung des selbstverzweigenden Polyetherimids nach einem der vorangehenden Ansprüche erhalten wurde.

9. Verzweigtes Polyetherimid nach Anspruch 8, das durch Schmelzverarbeitung des selbstverzweigenden Polyetherimids erhalten wird, bei der die thermische Decarboxylierung und die Vernetzung das verzweigte Polyetherimid ergeben.

10. Verzweigtes Polyetherimid nach Anspruch 8 oder 9, umfassend:
eine Glasübergangstemperatur von mehr als 160°C oder 160 bis 300°C oder 180 bis 250°C oder 200 bis 250°C, bestimmt durch dynamische Differenzkalorimetrie; und
eine Flammwidrigkeit von V0 bei einer Dicke von 0,8 mm, oder eine Flammwidrigkeit von V0 bei einer Dicke von 0,6 mm, oder eine Flammwidrigkeit von V0 bei einer Dicke von 0,4 mm, gemessen nach ASTM D3801.

11. Selbstverzweigende Polyamidsäure, umfassend ein Kondensationsreaktionsprodukt von:
einem Dianhydrid der Formel (5): 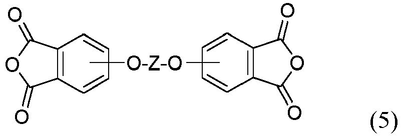 oder einem chemischen Äquivalent davon mit einem ersten Diamin;
gegebenenfalls einem zweiten Diamin; und
Phthalsäureanhydrid,
wobei das erste Diamin durch die Formel (6) dargestellt wird: 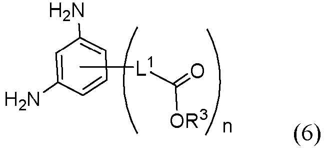 wobei
jedes L¹ unabhängig eine Einfachbindung oder eine zweiwertige Verknüpfungsgruppe ist,
jedes R³ unabhängig Wasserstoff, substituiertes oder unsubstituiertes C₁₋₃₀-Alkyl, substituiertes oder unsubstituiertes C₃₋₃₀-Cycloalkyl, substituiertes oder unsubstituiertes C₁₋₃₀-Heterocycloalkyl, substituiertes oder unsubstituiertes C₆₋₃₀-Aryl oder substituiertes oder unsubstituiertes C₁₋₃₀-Heteroaryl, vorzugsweise Wasserstoff, ist und
n eine ganze Zahl von 1 bis 3 oder 1 bis 2 ist,
oder wobei die zweiwertige Verknüpfungsgruppe eine oder mehrere der folgenden Gruppen ist: substituiertes oder unsubstituiertes C₁₋₃₀-Alkylen, substituiertes oder unsubstituiertes C₃₋₃₀-Cycloalkylen, substituiertes oder unsubstituiertes C₁₋₃₀-Heterocycloalkylen, substituiertes oder unsubstituiertes C₆₋₃₀-Arylen, substituiertes oder unsubstituiertes C₁₋₃₀-Heteroarylen, -O-, -C(O)-, - C(O)-O-, -N(_{R2b})-, -S- oder -S(O)₂-, wobei R^{2b} Wasserstoff, geradkettiges oder verzweigtes C₁₋₂₀-Alkyl, monocyclisches oder polycyclisches C₃₋₂₀-Cycloalkyl oder monocyclisches oder polycyclisches C₁₋₂₀-Heterocycloalkyl ist.

12. Selbstverzweigende Polyamidsäure nach Anspruch 11, wobei das erste Diamin durch die Formel (6a) dargestellt wird: 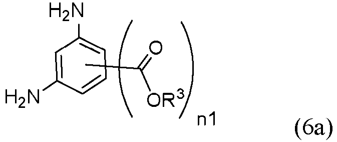 wobei
n1 eine ganze Zahl von 1 bis 3, vorzugsweise 1 oder 2 ist, und
jedes R³ unabhängig Wasserstoff, substituiertes oder unsubstituiertes C₁₋₃₀-Alkyl, substituiertes oder unsubstituiertesC₃₋₃₀-Cycloalkyl, substituiertes oder unsubstituiertes C₁₋₃₀-Heterocycloalkyl, substituiertes oder unsubstituiertes C₆₋₃₀-Aryl oder substituiertes oder unsubstituiertes C₁₋₃₀-Heteroaryl, vorzugsweise Wasserstoff, ist,
oder wobei das erste Diamin durch die Formel (6b) dargestellt 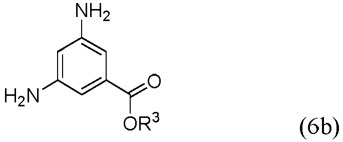 wird:
wobei R³ Wasserstoff, substituiertes oder unsubstituiertes C₁₋₃₀-Alkyl, substituiertes oder unsubstituiertesC₃₋₃₀-Cycloalkyl, substituiertes oder unsubstituiertes C₁₋₃₀-Heterocycloalkyl, substituiertes oder unsubstituiertes C₆₋₃₀-Aryl oder substituiertes oder unsubstituiertes C₁₋₃₀-Heteroaryl, vorzugsweise Wasserstoff, ist.

13. Verfahren zur Herstellung eines selbstverzweigenden Polyetherimids, wobei das Verfahren das Erhitzen der selbstverzweigenden Polyamidsäure nach Anspruch 11 zur Bildung des selbstverzweigenden Polyetherimids umfasst.

14. Verfahren nach Anspruch 13, wobei eine in Lösung gegossene Probe der selbstverzweigenden Polyamidsäure das selbstverzweigende Polyetherimid bei einer Temperatur von 250 bis 300°C oder 260 bis 300°C oder 265 bis 300°C bildet, wie durch thermogravimetrische Analyse bestimmt.

15. Gegenstand, umfassend ein verzweigtes Polyetherimid, erhalten aus dem selbstverzweigenden Polyetherimid nach einem der Ansprüche 1 bis 7, dem verzweigten Polyetherimid nach einem der Ansprüche 8 bis 10 oder einem verzweigten Polyetherimid, erhalten aus der selbstverzweigenden Polyamidsäure nach einem der Ansprüche 11 oder 12,
wobei es sich bei dem Gegenstand gegebenenfalls um eine Folie, eine Faser, einen Schaumstoff oder ein Formteil handelt.

## Revendications

1. Polyétherimide à auto-ramification, comprenant :
un premier motif répétitif dérivé de la polymérisation du dianhydride aromatique et d'une première diamine, dans lequel la première diamine comprend un groupe hydrocarboné aromatique en C_{6 à 24} substitué par un carboxyle ; et
facultativement, un second motif répétitif dérivé de la polymérisation d'un dianhydride aromatique et d'une seconde diamine, dans lequel la seconde diamine comprend un groupe hydrocarboné divalent en C₁ à ₃₀, facultativement comprenant 1 à 4 hétéroatomes,
dans lequel le polyétherimide à auto-ramification est coiffé aux extrémités par de l'anhydride phtalique.

2. Polyétherimide à auto-ramification de la revendication 1, dans lequel le premier motif répétitif est représenté par la formule (1) et le second motif répétitif est représenté par la formule (2) : 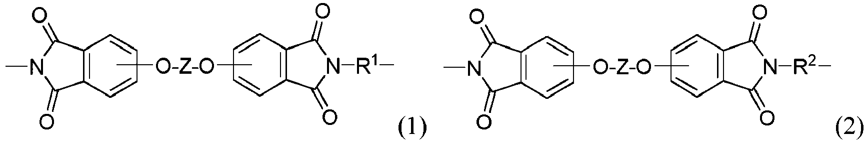 dans lesquelles
chaque Z représente indépendamment un fragment aromatique monocyclique ou polycyclique en C₆ à ₂₄ facultativement substitué par 1 à 6 hétéroatomes, 1 à 8 atomes d'halogène, ou une combinaison de ceux-ci, à condition que la valence de Z ne soit pas dépassée ;
chaque R¹ représente indépendamment un groupe de formule (3) : 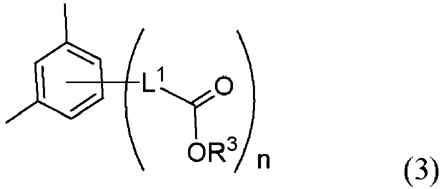 dans laquelle,
chaque L¹ représente indépendamment une liaison simple ou un groupe de liaison divalent, de préférence dans laquelle le groupe de liaison divalent est un ou plusieurs parmi un alkylène en C₁ à ₃₀ substitué ou non substitué, un cycloalkylène en C_{3 à 30} substitué ou non substitué, un hétérocycloalkylène en C_{1 à 30} substitué ou non substitué, un arylène en C₆ à ₃₀ substitué ou non substitué, un hétéroarylène en C₁ à ₃₀ substitué ou non substitué, -O-, -C(O)-, - C(O)-O-, -N(R^{2b})-, - S-, ou -S(O)₂-, où R^{2b} est un hydrogène, un alkyle en C₁ à ₂₀ à chaîne linéaire ou ramifiée, un cycloalkyle en C_{3 à 20} monocyclique ou polycyclique, ou un hétérocycloalkyle en C₁ à ₂₀ monocyclique ou polycyclique ;
chaque R³ représente indépendamment un hydrogène, un alkyle en C₁ à ₃₀ substitué ou non substitué, un cycloalkyle en C_{3 à 30} substitué ou non substitué, un hétérocycloalkyle en C₁ à ₃₀ substitué ou non substitué, un aryle en C₆ à ₃₀ substitué ou non substitué, ou un hétéroaryle en C_{1 à 30} substitué ou non substitué, de préférence un hydrogène ;
n est un nombre entier de 1 à 3, ou égal à 1 ou 2 ; et
chaque R² représente indépendamment un groupe hydrocarboné divalent en C₁ à ₃₀, facultativement comprenant 1 à 4 hétéroatomes.

3. Polyétherimide à auto-ramification de la revendication 2, dans lequel chaque R¹ représente indépendamment un groupe de formule (3a) : 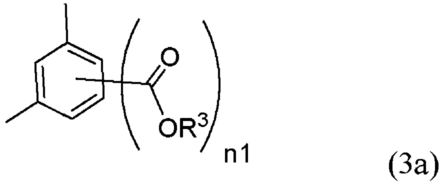
dans laquelle n1 est un nombre entier de 1 à 3, ou égal à 1 ou 2,
ou dans lequel chaque R¹ représente indépendamment un groupe de formule (3b) :

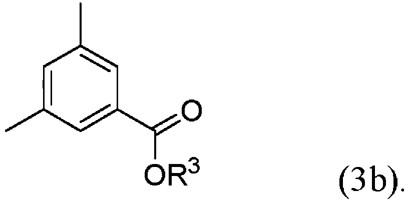

4. Polyétherimide à auto-ramification de l'une quelconque des revendications précédentes, dans lequel chaque R² est un groupe hydrocarboné aromatique en C_{6 à 24} ou un dérivé halogéné de celui-ci, un groupe alkylène en C_{2 à 20} à chaîne linéaire ou ramifiée ou un dérivé halogéné de celui-ci, ou un groupe cycloalkylène en C₃ à ₈ ou un dérivé halogéné de celui-ci ;
ou dans lequel chaque R² représente indépendamment un groupe divalent de formules : 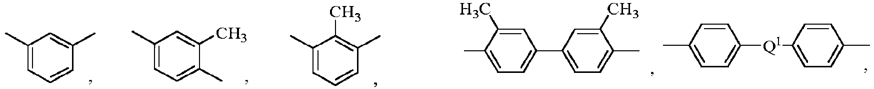 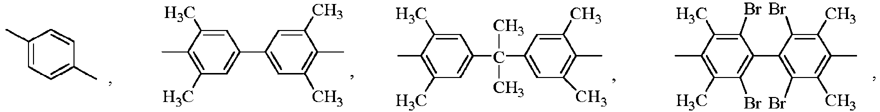 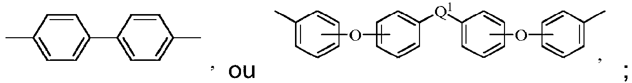 dans lesquelles,
Q¹ est -O-, -S-, -C(O)-, -SO₂-, -SO-, -P(R^{k})(O)-, -C_{y}H₂- ou un dérivé halogéné de celui-ci, ou -(C₆H₁₀)_{z}- ;
R^{k} est un alkyle en C_{1 à 8} ou un aryle en C_{6 à 12} ;
y est un nombre entier de 1 à 5 ; et
z est un nombre entier de 1 à 4 ;
ou dans lequel chaque R² représente indépendamment un méta-phénylène, un para-phénylène, une bis(4,4'-phénylène)sulfone, une bis(3,4'-phénylène)sulfone ou une bis(3,3'-phénylène)sulfone.

5. Polyétherimide à auto-ramification de l'une quelconque des revendications précédentes, dans lequel chaque Z est indépendamment dérivé d'un composé dihydroxy de formule (4) : 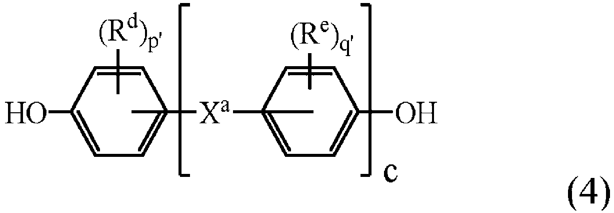 dans laquelle,
chaque R^{d} et R^{e} représente indépendamment un atome d'halogène ou un groupe alkyle monovalent en C_{1 à 6},
p' et q' représentent chacun indépendamment des nombres entiers de 0 à 4,
c est de 0 à 4, et
X^{a} est une liaison simple, -O-, -S-, -S(O)-, -S(O)₂-, -C(O)- ou un groupe de pontage organique en C_{1 à 18} ; ou
dans lequel chaque Z représente indépendamment un groupe divalent de formule (4a) : 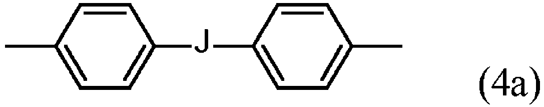 dans laquelle,
J est -O-, -S-, -C(O)-, -SO₂-, -SO- ou -C_{y}H_{2y}- ou un dérivé halogéné de celui-ci, et
y est un nombre entier de 1 à 5.

6. Polyétherimide à auto-ramification de l'une quelconque des revendications précédentes, comprenant :
0,01 à 100% en moles, ou 1 à 75% en moles, ou 10 à 50% en moles du premier motif répétitif ; et
0 à 99,99% en moles, ou 25 à 99% en moles, ou 50 à 90% en moles du second motif répétitif,
chacun par rapport à 100% en moles du total de motifs répétitifs du polyétherimide auto-réticulable.

7. Polyétherimide à auto-ramification de l'une quelconque des revendications précédentes, comprenant :
une température de transition vitreuse supérieure à 200°C, ou de 200 à 400°C, ou de 220 à 400°C, ou de 220 à 360°C, telle que déterminée par analyse calorimétrique différentielle ;
une température de décomposition thermique supérieure à 450°C, ou de 450 à 550°C, ou de 500 à 550°C, telle que déterminée à une perte de poids de 5% par analyse thermogravimétrique ; ou
une combinaison de celles-ci.

8. Polyétherimide ramifié, dérivé de la décarboxylation thermique et de la réticulation du polyétherimide à auto-ramification de l'une quelconque des revendications précédentes.

9. Polyétherimide ramifié de la revendication 8, qui est obtenu par traitement à l'état fondu du polyétherimide à auto-ramification, au cours duquel la décarboxylation thermique et la réticulation fournissent le polyétherimide ramifié.

10. Polyétherimide ramifié de la revendication 8 ou 9, comprenant :
une température de transition vitreuse supérieure à 160°C, ou de 160 à 300°C, ou de 180 à 250°C, ou de 200 à 250°C, telle que déterminée par analyse calorimétrique différentielle ; et
un indice d'ignifugation de V0 à une épaisseur de 0,8 mm, ou un indice d'ignifugation de V0 à une épaisseur de 0,6 mm, ou un indice d'ignifugation de V0 à une épaisseur de 0,4 mm, mesuré selon la norme ASTM D3801.

11. Acide polyamique à auto-ramification, comprenant un produit de réaction de condensation de :
un dianhydride de formule (5) : 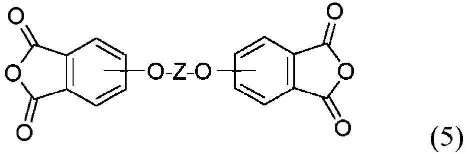
ou un équivalent chimique de celui-ci avec une première diamine ; facultativement une seconde diamine ; et
de l'anhydride phtalique,
dans lequel la première diamine est représentée par la formule (6) : 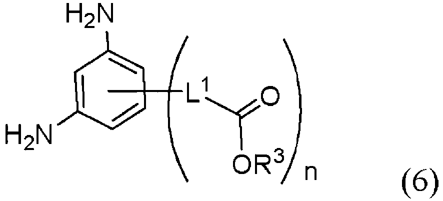 dans laquelle,
chaque L¹ représente indépendamment une liaison simple ou un groupe de liaison divalent,
chaque R³ représente indépendamment un hydrogène, un alkyle en C₁ à ₃₀ substitué ou non substitué, un cycloalkyle en C_{3 à 30} substitué ou non substitué, un hétérocycloalkyle en C₁ à ₃₀ substitué ou non substitué, un aryle en C₆ à ₃₀ substitué ou non substitué, ou un hétéroaryle en C₁ à ₃₀ substitué ou non substitué, de préférence un hydrogène, et
n est un nombre entier de 1 à 3, ou égal à 1 ou 2,
ou dans laquelle le groupe de liaison divalent est un ou plusieurs parmi un alkylène en C₁ à ₃₀ substitué ou non substitué, un cycloalkylène en C₃ à ₃₀ substitué ou non substitué, un hétérocycloalkylène en C₁ à ₃₀ substitué ou non substitué, un arylène en C₆ à ₃₀ substitué ou non substitué, un hétéroarylène en C₁ à ₃₀ substitué ou non substitué, -O-, -C(O)-, -C(O)-O-, -N(R^{2b})-, - S-, ou - S(O)₂-, où R^{2b} est un hydrogène, un alkyle en C₁ à ₂₀ à chaîne linéaire ou ramifiée, un cycloalkyle en C₃ à ₂₀ monocyclique ou polycyclique, ou un hétérocycloalkyle en C₁ à ₂₀ monocyclique ou polycyclique.

12. Acide polyamique à auto-ramification de la revendication 11, dans lequel la première diamine est représentée par la formule (6a) : 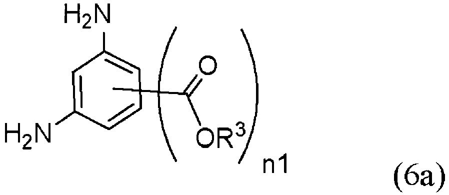 dans laquelle,
n1 est un nombre entier de 1 à 3, de préférence 1 ou 2, et
chaque R³ représente indépendamment un hydrogène, un alkyle en C₁ à ₃₀ substitué ou non substitué, un cycloalkyle en C_{3 à 30} substitué ou non substitué, un hétérocycloalkyle en C₁ à ₃₀ substitué ou non substitué, un aryle en C₆ à ₃₀ substitué ou non substitué, ou un hétéroaryle en C_{1 à 30} substitué ou non substitué, de préférence un hydrogène,
ou dans lequel la première diamine est représentée par la formule (6b) : 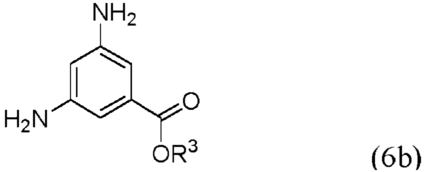
dans laquelle R³ représente un hydrogène, un alkyle en C₁ à ₃₀ substitué ou non substitué, un cycloalkyle en C_{3 à 30} substitué ou non substitué, un hétérocycloalkyle en C₁ à ₃₀ substitué ou non substitué, un aryle en C₆ à ₃₀ substitué ou non substitué, ou un hétéroaryle en C₁ à ₃₀ substitué ou non substitué, de préférence un hydrogène.

13. Procédé de fabrication d'un polyétherimide à auto-ramification, le procédé comprenant le chauffage de l'acide polyamique à auto-ramification de la revendication 11 pour former le polyétherimide à auto-ramification.

14. Procédé de la revendication 13, dans lequel un échantillon coulé en solution de l'acide polyamique à auto-ramification forme le polyétherimide à auto-ramification à une température de 250 à 300°C, ou de 260 à 300°C, ou de 265 à 300°C, telle que déterminée par analyse thermogravimétrique.

15. Article comprenant un polyétherimide ramifié obtenu à partir du polyétherimide à auto-ramification de l'une quelconque des revendications 1 à 7, le polyétherimide ramifié de l'une quelconque des revendications 8 à 10, ou un polyétherimide ramifié obtenu à partir de l'acide polyamique à auto-ramification de l'une quelconque des revendications 11 ou 12,
facultativement dans lequel l'article est un film, une fibre, une mousse ou une pièce moulée.
